(19) Europäisches Patentamt
European Patent Office
Office européen des brevets

(11) Publication number: **0 021 105 B2**

(12) **NEW EUROPEAN PATENT SPECIFICATION**

(45) Date of publication of the new patent specification: **02.11.88**

(51) Int. Cl.⁴: **C 09 B 62/085**, C 09 B 62/51, D 06 P 3/66

(21) Application number: **80103005.7**

(22) Date of filling: **29.05.80**

(54) **Reactive dyes, process for their preparation and their use for dyeing cellulose fibers.**

(30) Priority: **01.06.79 JP 69127/79**
**11.07.79 JP 88502/79**
**20.12.79 JP 166705/79**
**20.12.79 JP 166706/79**

(43) Date of publication of application:
**07.01.81 Bulletin 81/1**

(45) Publication of the grant of the patent:
**23.03.83 Bulletin 83/12**

(45) Mention of the opposition decision:
**02.11.88 Bulletin 88/44**

(84) Designated Contracting States:
**BE CH DE FR GB IT LI NL**

(56) References cited:
**CH-A-410 237**
**DE-A-2 614 550**
**FR-A-2 084 024**
**JP-B-39 018 184**
**US-A-3 223 470**

**"The Chemistry of Synthetic Dies", Vol. VI by K. Venkatamaran**
**"KAGAKU TO KOGYO" (Science and Industry), Vol.42, No.11(1968), p.25-35.**
**"Lehrbuch der organischen Chemie", Vol.III (1958), p.33 and 36 (by F. Klages - edited by W. De Gruyter & Co).**
**"The Chemistry of Synthetic Dyes", Vol.I (1952), p.339 and 343 (K. Venkataraman - Academic Press)**
**"The Chemistry of Synthetic Dyes", Vol.VI (1972),**

(73) Proprietor: **SUMITOMO CHEMICAL COMPANY, LIMITED, 15 Kitahama 5-chome Higashi- ku, Osaka- shi Osaka 541 (JP)**

(72) Inventor: **Kayane, Yutaka, 3, Takasecho- 3-chome, Moriguchi- shi (JP)**
Inventor: **Sunami, Masaki, 11- 8-404, Sonehigashinocho- 2-chome, Toyonaka- shi (JP)**
Inventor: **Tezuka, Yasuo, 7-3, Funakicho, Ibaraki- shi (JP)**

(74) Representative: **Vossius & Partner, Siebertstrasse 4 P.O. Box 86 07 67, D-8000 München 86 (DE)**

(56) References cited: (continuation)
**p. 229-231 (K. Venkataraman - Academic Press).**

**The file contains technical information submitted after the application was filed and not included in this specification**

EP 0 021 105 B2

LIBER, STOCKHOLM 1988

**Description**

Reactive dyes, process for their preparation and their use for dyeing fibres.

This invention relates to compounds for dyeing celluiose fiber yellow, a process for preparing such compounds and their use for dyeing.

More particularly, the invention relates to dyes which are presented in the form of free acid, by the following general formula (I):

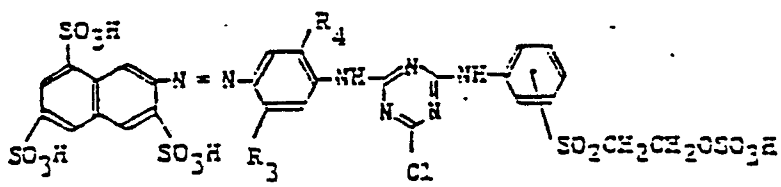

(I)

wherein

| | |
|---|---|
| $R_3$ | is methyl and $R_4$ is methoxy and residue $-SO_2CH_2CH_2OSO_3H$ is attached to the benzene ring in m-position; or |
| $R_3$ | is acetylamino and $R_4$ is hydrogen and the residue $-SO_2CH_2CH_2OSO_3H$ is attached to the benzene ring in m-position; or |
| $R_3$ | is ureido and $R_4$ is hydrogen and the residue $-SO_2CH_2CH_2OSO_3H$ is attached to the benzene ring in m- or p-position, |

a process for preparing such dyes and their use for dyeing cellulose fiber.

It is known that the dyes having a β-sulfatoethyl sulfonyl group, or so-called vinyl sulfone type reactive dyes, are usable for dyeing the textile materials. However, the textile materials dyed with the azo type yellow reactive dyes having a β-sulfatoethyl sulfonyl group are generally low in color fastness to hypochlorite and have often raised the problem of fading due to chlorine contained in tap water. Therefore, the advent of a yellow reactive dye with exellent color fastness to hypochlorite has been strongly desired.

There are also known the yellow dyes having a monochlorotriazinyl group which is another typical reactive group different from said β-sulfatoethyl sulfonyl group, but these reactive dyes usually require a high temperature for dyeing and also lack dyeability for exhaustion dyeing, and furhter the fabrics dyed with these dyes are poor in acid stability. Thus, these dyes are far from satisfactory for practical use.

Generally, the reactive dyes which have dyeability for exhaustion dyeing are poor in wasn-off properties, so that a great deal of labor and time as wall as voluminous washing water is required for removing unfixed dye during soaping.

In view of the above, the present inventors have made further studies in search for a vinyl sulfone type yellow reactive dye having excellent color fastness to hypochlorite, dyeability for exhaustion dyeing and wash-off properties and found as a result that the dyes represented by the above-shown general formula (I), namely the monoazo dyes having a β-sulfatoethyl sulfonyl group and a monochlorotriazinyl group as reactive grouop are capable of providing the yellow dyed fabrics with excellent color fastness to hypochlorite. It was also revealed that the dyes of this invention can eliminate said defects of the reactive dyes having a monochlorotriazinyl group.

The cellulose fibers to which the dyes of this invention can be applied include both natural and re-generated cellulose fibers such as cotton, hemp, viscose rayon, viscose staple fiber, etc.

In the case of exhaustion dyeing, the dyeing operation by use of a dye of this invention can be accomplished at a relatively low temperature in a dye bath added with Glauber's salt or common salt in the presence of an acid binder such as sodium carbonate, sodium teriary phosphate, sodium hydroxide, etc. Dyeing according to a printing method is also possible.

The dyes of this invention can, for example, be produced in the following way.

2-aminonaphtalene-3,6,8-trisulfonic acid of the formula (II):

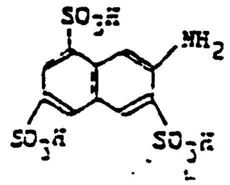

(II)

is diazotized and coupled with an amino compound of the general formula (III):

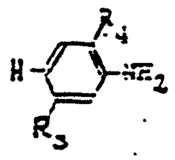

(III)

(wherein $R_3$ and $R_4$ are as defined above)
to obtain a monoazo compound of the general formula (IV):

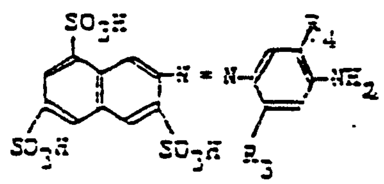

(IV)

(wherein $R_3$ and $R_4$ are as defined above)
and this monoazo compound is condensed primarily with cyanuric chlroide to obtain a dichlorotriazinyl compound. Then this compound is subjected to secondary condensation with an aniline compound of the general formula (V):

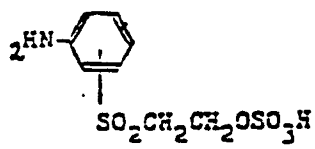

(V)

to obtain a dye of the general formula (I).

In another method, an aniline compound of the general formula (V) is condensed primarily with cyanuric chloride and then a monoazo compound of the general formula (IV) is condensed therewith secondarily to obtain a dye of the general formula (I).

It is also possible to obtain a dye of the general formula (I) by conductin the above-said reaction by using a β-hydroxyethylsulfonyl compound of the general formula (VI):

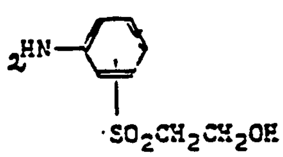

(VI)

instead of the aniline compound of the general formula (V) and esterifying the reaction product in sulfuric acid.

The compounds of the general formula (III) are:
1-aminobenzene-3-β-sulfatoethylsulfone
1-aminobenzene-4-β-sulfatoethylsulfone

The thus obtained dyes of this invention have excallent color fastness to hypochlorite, light, perspiration and sunlight. It is particularly noticeable that they are suited for exhaustion dyeing and also excellent in wash-off properties.

Further, the dyes of this invention are capable of level dyeing, have a wide range of dyeing temperatures applicable and are minimized in effect by the amount of inorganic salt used and bath ratio, hence have good color reproducibility.

Among the known dyes analogous to those of the present invention are, for example, the monochlorotriazine type yellow reactive dyes which, in the form of free acid, are represented by the following formulae:

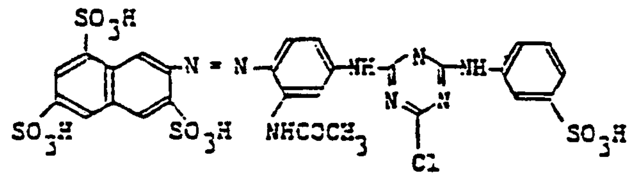

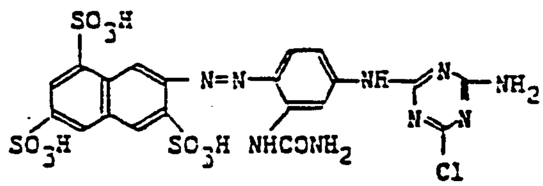

Japanese Patent Publication No. 2634/1964) and

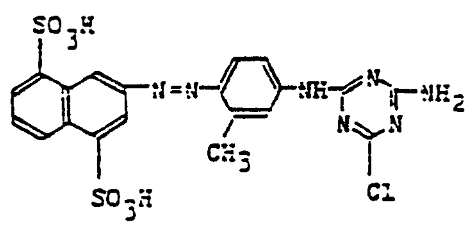

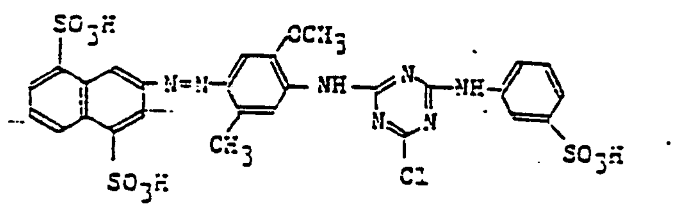

(Japanese Patent Publication No. 10628/1960). These dyes, however, require a high temperature for dyeing and also lack exhaustion dyeing ability, so that when used for dip dyeing, they cannot produce the desired color density. Also, the dyed fabrics are poor in acid stability and vulnerable to change in quality with time.

Japanese Patent Publication No. 18184/1964 shows the yellow reactive dyes represented by the following formulae:

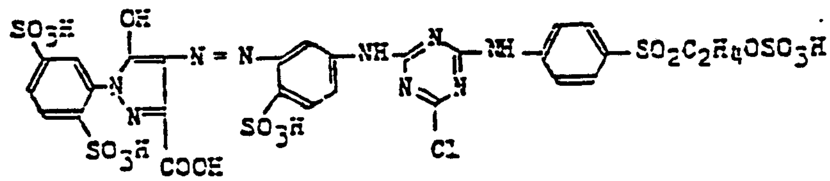

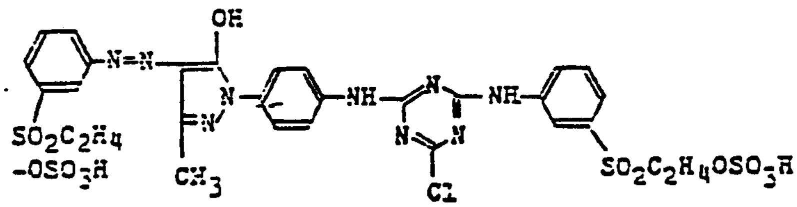

These dyes are very low in color fastness to hypochlorite, which is rated as low as 1st grade according to the ISO standards, and hence they are of little practical value.

In US-A-3-223 470 a process for the preparation of dyeings and prints is described which are fast to wet processing. According to this patent fast dyeings and prints can be produced on various fibrous materials, for example such as natural or regenerated cellulose fibers, wool silk or polyamide fibers, by applying to the fibrous material water soluble dyestuffs which contain the grouping

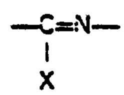

and at least one of the groupings

$-SO_2-CH_2-CH_2-OY$, $-SO_2-CH=CH_2$ or $-SO_2-CH_2-X$

in which X represents a halogen atom and Y represents the radical of a polybasic acid, and by fixing the dyestuffs at normal or raised temperature in the presence of agents giving an alkaline reaction. An example of the compounds described in US-A-3 223 470 has the following structure:

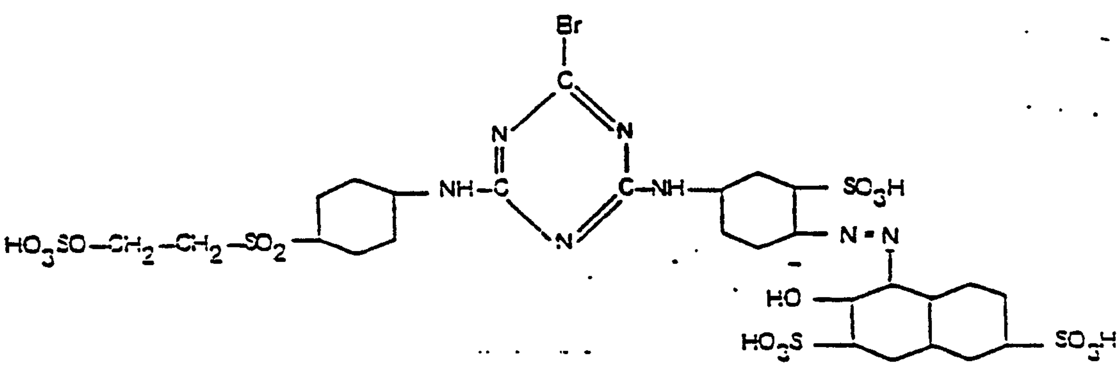

Water-soluble azo dyes, suitable for coloring natural and synthetic textiles, are disclosed in CH-A-410 237. They correspond to the formula

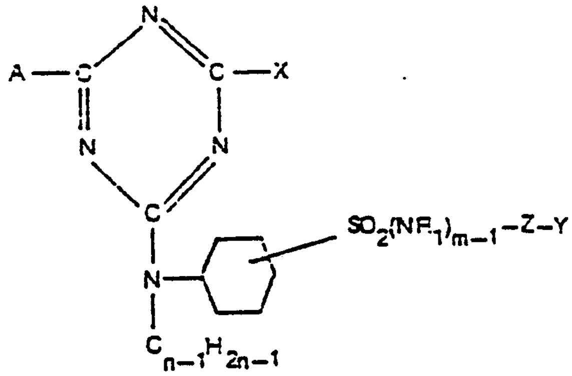

wherein

A means the radical of a water-soluble azo dye which is bound via 3 nitrogen atom to the triazine ring,

X is chlorine or bromine,

n an integar of up to 5,

m is either 1 or 2,

$R_1$ is a hydrogen atom or the group -Z-Y, -Z- being lower α, β-alkylene group and -Y a chlorine atom, a sulfato group, a phosphato group or an acylated hydroxy group.

Furthermore, FR-A-2 084 024 discloses reactive dyes which are of interest especially for dyeing cellulosic textiles. These dyes correspond to the following general formula:

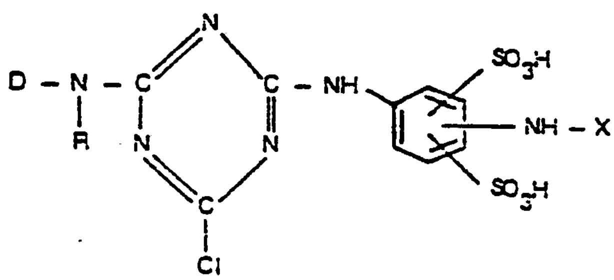

wherein

R means a hydrogen atom or an alkyl group,

D is the radical of an azoamine compound in which the nitrogen atoms of the azo group or groupes are bound to carbon atoms with homocyclic aromatic nuclei and

X is the radical of an uncolored organic acid containing a substituent which is reactive with cellulose.

A dye of the formula

A dve of the formula

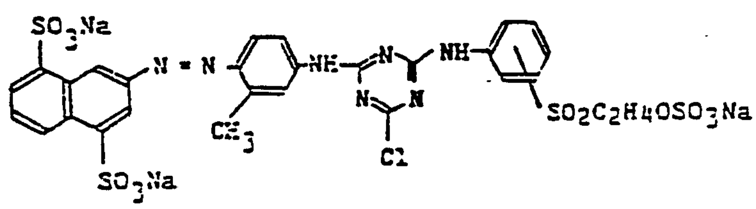

is known from Kagaku to Kogyo (Sience + Industry), Vol. 42 (11) 1968, p. 23 - 34. This dye while showing a somewhat higher fixing percentage does not exhibit better light fastness and washing fastness that the dye having a monochlorotriazinyl group as the only fiber reactive group.

As regard dyeability and fastness to chlorine and light the known dyes having one vinylsulfone group are not satisfactory. This applies particularly also to the dyes known from US-A-2 334 470.

Color fastness to hypochlorite of the dyes according to this invention is rated as 3rd to 4th grade in the ISO standards, and in view of the popular use of hypochlorite bleaching agents for general domestic laundry these days, the dyes of this invention having excellent color fastness to hypochlorite are of considerable merit. As for

color fastness to perspiraiton and sunlight which has become a serious concern with spread of sportswear in recent years, the dyes of this invention also have excellent color fastness to perspiration and sunlight (3rd to 5th grade) as well as fastness to light (6th to 7th grade), which adds to the practical value of the dyes of this invention. The conventional reactive dyes involved the problem that the textile materials dyed therewith would be affected by acidic gas or other matters in the air and lowered in color fastness with the laps of time, but the dyes of this invention have eliminated such problem, too. The fabrics dyed with the dyes of this invention show high acid stability (4th to 5th grade) (as tested by immersing the dyed fabric in 1 % acetic acid for 30 minutes and then subjecting it to a 6-hour treatment under the conditions of 37 ± 2°C and 125 g/cm$^2$ by using a perspirometer).

Further, the dyes of this invention show a high rate of exhaustion and fixing in exhausiton dyeing, allowing obtainment of the dyed goods with high color density. They are also distinguished by their excellent wash-off properties, easy removability of the unfixed dye and very limited dye leavings in the dye bath, which indicates advantage of the dyes of this invention in respect of waste water treatment, too.

Moreover, the dyes of this inveniton are usable within a wice range of dyeing temperatures, irrespective of the kind of alkali agents, the amount of inorganic salts used and bath ration in exhaustion dyeing, and are capable of dyeing fabrics with extremely high reproducibility.

The invention is futher described below by way of the examples therof. All "parts" are by weight unless otherwise noted. $\lambda_{max}$ of dye was measured in aqueous medium.

**Example 1 - (a)**

A dye of the following formula (1):

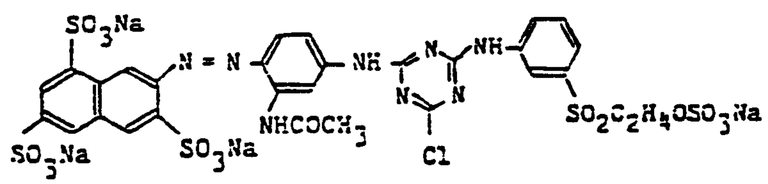

(1)

($\lambda_{max}$ 400 nm)

was dissolved in 200 parts of water, and this solution was added with 20 parts of Glauber's salt and 10 parts of cotton and the heated to 50°C. 30 minutes after, the mixed solution was further added with 4 parts of sodium carbonate. Dyeing was performed with this dye solution at said temperature for one hour.

After completion of dyeing, the dyed stuff was washed with water and then subjected to soaping and a yellow dyed fabric with excellent to color fastness, and with good reproducibility was obtained (Color fastness to hypochlorite: 3 - 4th grade (ISO standards): color fastness to persipiration and sunlight: 5th grade).

**Example 1 - (b)**

(Synthesis of the dye (1) of Example 1 - (a))

8,5 parts of a disodium 2-aminonaphthalene-3,6,8-trisulfonate was added to and dissolved in 100 parts of water, the pH of the solution being adjusted to 8 with sodium hydroxide. This solution was 100 parts of water, the pH of sodium nitrite, and after cooling the solution to 0 - 5°C. 6,1 parts of concentrated hydrochloric acid was poured into it and mixed solution was stirred at the same temperature for 30 minutes. After removing excess nitrous acid, this pasty solution was added at 0 - 5°C to a solution formed by dissolving 3,3 parts of m-acetylaminoaninline in 80 parts of water. The pH of this solution was adjusted to 3 - 5, and after coupling has been completed pH was raised to 8 to dissolve the products. This solution was added with 4,1 parts of cyanuric chloride and stirred at 20 - 25°C for 5 hours while controlling the pH 5 - 6 by using a 20 % aqueous solution of sodium carbonate. The solution was added with 6,8 parts of a 1-aminobenzene-3-β-hydroxyethylsulfonesulfuric ester, heated to 40°C and stirred at this temperature for 5 hours while controlling the pH at 5 - 6 by using a 20 % aqueous solution of sodium carbonate. This solution was added with 25 parts of sodium chloride to percipitate the crystals, and these crystals were subjected to suction filtration, washing and drying at 60°C to obtain the dye (1).

**Example 2**

The dyeing operation and after-treatment of Example 1 - (a) were repeated by using a dye of the following formula (2).

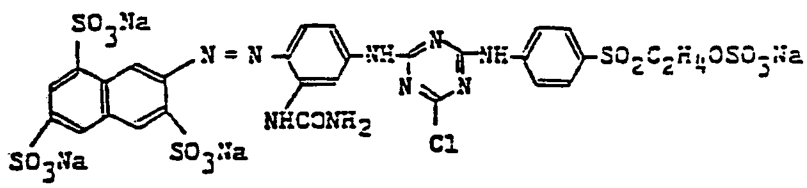

(2)

($\lambda_{max}$ 415 nm)

(obtained after the manner of Example 1 - (b) by using 3-aminophenylurea instead of m-acetylaminoaniline) to obtain a high-density yellow dyed fabric with excellent fastness properties, particularly color fastness to hypochlorite. Color reproducibility was also excellent. (Color fastness to hypochlorite: 4th grade: color fastness to perspiration and sunlight: 4 - 5th grade: exhaustion rate: 95 %: fixing rate: 90 %: acid stability: 5th grad).

Dyeing was performed likewise by using the dye (3) having components of the general formulae (IV) and (V) or (VI) shown below to obtain yellow dyed fabrics with excellent color fastness to hypochlorite.

| | General Formula (IV) | General Formula (V) or (VI) | $\lambda_{max}$ (nm) |
|---|---|---|---|
| (3) | 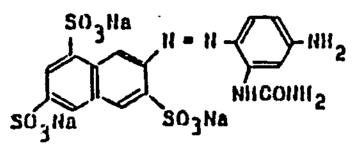 | 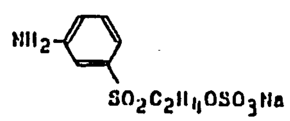 | 415 |

**Example 3 - (a)**

The dyeing process and after-treatment of Example 1 - (a) were repeated but by setting the dyeing temperature at 60° C and using a dye represented by the following formula (4):

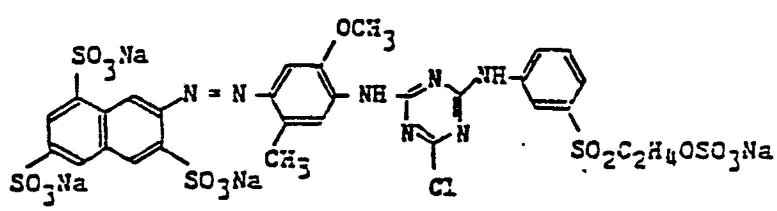

(4)

($\lambda_{max}$ 404 nm)

A yellow dyed fabric with excellent color fastness to various elements, especially good color fastness to hypochlorite (3 - 4th grade, ISO standard) was obtained.

**Example 3 - (b)**

(Synthesis of the dye (4) of Example 3 - (a))

The synthesizing process of Example 1 - (b) was repeated by using a solution formed by dissolving 3,5 parts of p-cresidine hydrochloride in 80 parts of eater instead of using 3,3 parts of m-acetylaminoaniline as coupler to obtain the dye (4).

## Claims

1. A compound of the following formula in the form of the free acid

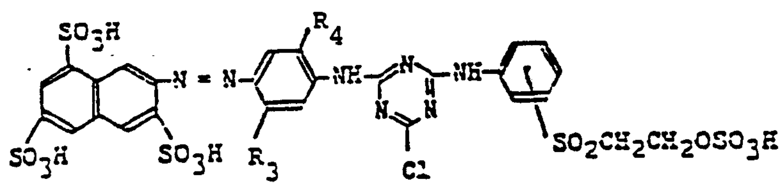

wherein

$R_3$ is methyl and $R_4$ is methoxy and residue $-SO_2-CH_2CH_2OSO_3H$ is attached to the benzene ring in m-position; or

$R_3$ is acetylamino and $R_4$ is hydrogen and the residue $-SO_2CH_2CH_2OSO_3H$ is attached to the benzene ring in m-position; or

$R_3$ is ureido and $R_4$ is hydrogen and the residue $-SO_2CH_2CH_2OSO_3H$ is attached to the benzene ring in m- or p-position.

2. The compound of the formula in the form of the free acid:

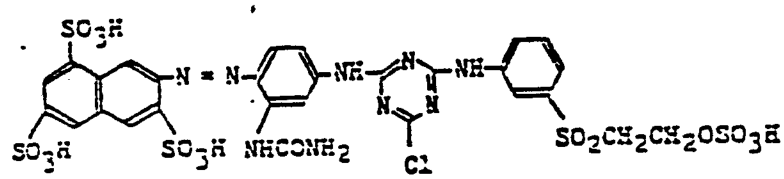

3. The compound of the formula in the form of the free acid:

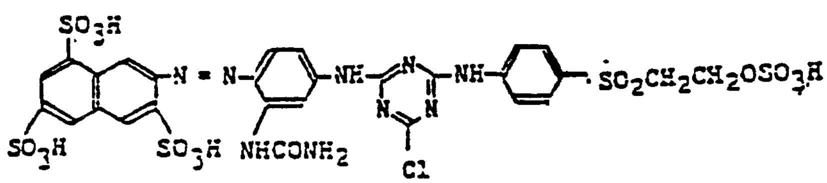

4. A process for preparing a compound of the formula (I) of claim 1 by diazotizing a 2-aminonaphthalenesulfonic acid of the formula (II):

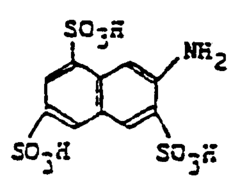

(II)

coupling it with an amino compound of the formula (III):

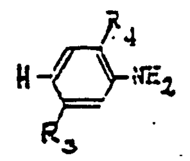

(III)

wherein $R_3$ and $R_4$ are as defined above, to obtain a monoazo compound of the formula (IV):

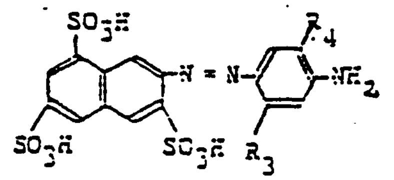

(IV)

wherein $R_3$ and $R_4$ are as defined above, subjecting this compound to primary condensation with cyanuric chloride to obtain a dichlorotriazinyl compound, and futher subjecting this compound to secondary condensation with an aniline compound of the formula (V):

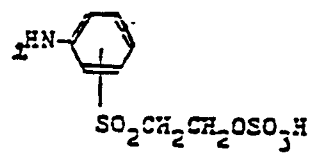

(V)

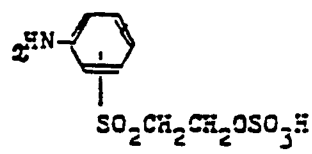

(V)

5. A process for preparing a compound of the formula (I) of claim 1 by primarily condensing an aniline compound of the formula (V):

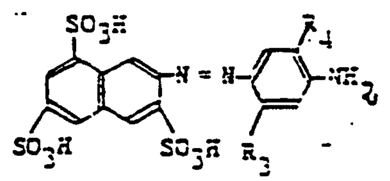

(IV)

wherein $R_3$ and $R_4$ are as defined above.

6. A process for preparing a compound of the formula (I) of claim 1 by primarily condensing a β-hydroxyethylsulfonyl compound of the formula (VI):

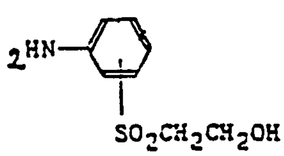

(VI)

with cyanuric chloride, then secondarily condensing it with a monoazo compound of the formula (IV):

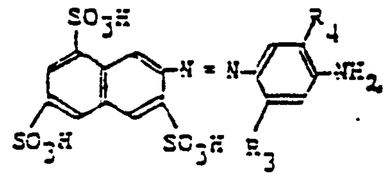

(IV)

wherein $R_3$ and $R_4$ are as defined above, and finally esterifying the condensed product in sulfuric acid.

7. A process for preparing a compound of the formula (I) of claim 1 by primarily condensing a monoazo compound of the formula (IV):

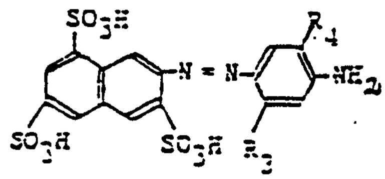

(IV)

wherein $R_3$ and $R_4$ are as defined above, with cyanuric chloride, secondarily condensing the resultant with β-hydroxyethylsulfonyl compound of the formula (VI):

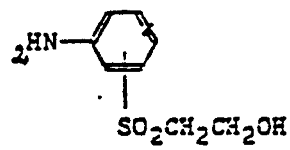

(VI)

and then esterfying the condensed product in sulfuric acid.

8. Use of a compound according to claims 1 to 3 for dyeing cellulose fibers.

**Patentansprüche**

1. Eine Verbindung der folgenden Formel in Form der freien Säure:

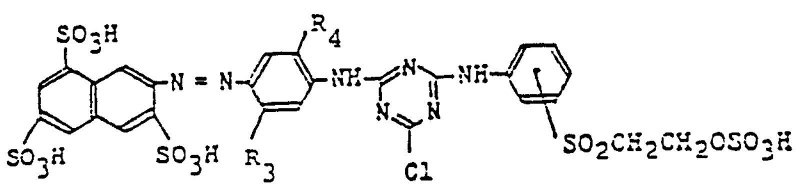

(I)

in der

$R_3$ eine Methylgruppe ist und
$R_4$ eine Methoxygruppe ist und der Rest $-SO_2CH_2CH_2OSO_3H$ an den Benzolring in m-Stellung gebunden ist; oder
$R_3$ eine Acetylaminogruppe ist und
$R_4$ ein Wasserstoffatom bedeutet und der Rest $SO_2CH_2CH_2OSO_3H$ an den Benzolring in m-Stellung gebunden ist; oder
$R_3$ eine Ureidogruppe ist und
$R_4$ ein Wasserstoffatom bedeutet und der Rest $-SO_2CH_2CH_2OSO_3H$ an den Benzolring in m- oder p-Stellung gebunden ist.

2. Verbindung der Formel in Form der freien Säure:

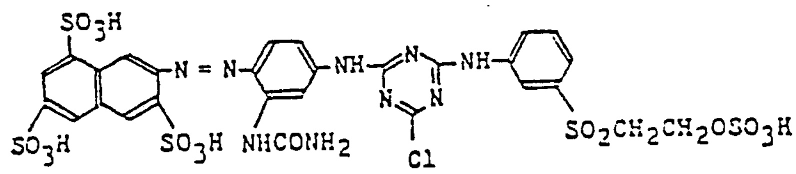

3. Verbindung der Formel in Form der freien Säure:

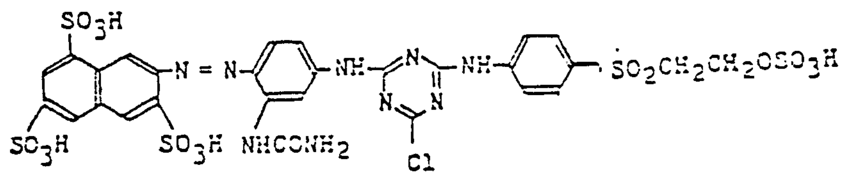

4. Ein Verfahren zur Herstellung einer Verbindung der Formel (I) von Anspruch 1, wobei eine 2-Aminonaphthalinsulfonsäure der Formel (II)

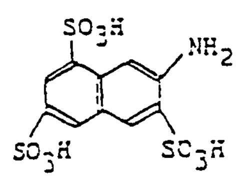

(II)

diazotiert und mit einer Amino-Verbindung der Formel (III)

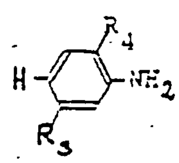

(III)

in der $R_3$ und $R_4$ wie vorstehend definiert sind, gekuppelt wird, um eine Monoazo-Verbindung der Formel (IV) zu erhalten:

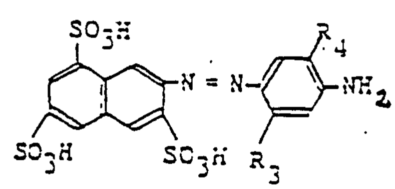

(IV)

in der $R_3$ und $R_4$ wie vorstehend definiert sind, diese Verbindung einer primären Kondensation mit Cyanursäurechlorid unterworfen wird, um eine Dichlortriazinyl-Verbindung zu erhalten, und weiter diese Verbindung einer sekundären Kondensation mit einer Anilin-Verbindung der Formel (V)

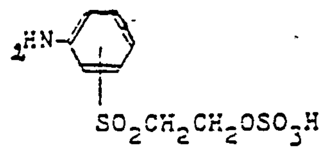

(V)

unterworfen wird.

5. Ein Verfahren zur Herstellung einer Verbindung der Formel (I) von Anspruch 1, wobei zunächst eine Anilin-Verbindung der Formel (V)

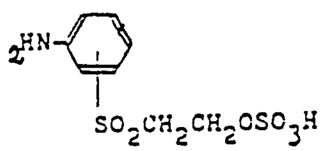

(V)

mit Cyanursäurechlorid kondensiert und dann mit einer Monoazo-Verbindung der Formel (IV)

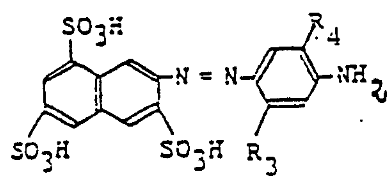

(IV)

in der $R_3$ und $R_4$ wie vorstehend definiert sind, ein zweites Mal kondensiert wird.

6. Verfahren zur Herstellung einer Verbindung der Formel (I) von Anspruch 1, wobei zunächst eine β-Hydroxyäthylsulfonyl-Verbindung der Formel (VI)

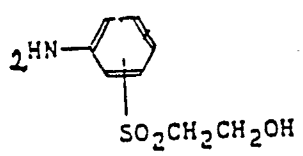

(VI)

mit Cyanursäurechlorid kondensiert, danach mit einer Monoazo-Verbindung der Formel (IV)

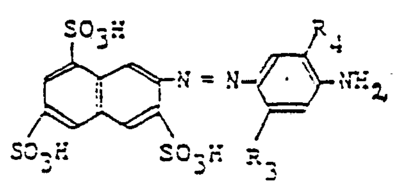

(IV)

in der $R_3$ und $R_4$ wie vorstehend definiert sind, ein zweites Mal kondensiert und schließlich das Kondensationsprodukt in Schwefelsäure verestert wird.

7. Verfahren zur Herstellung einer Verbindung der Formel (I) von Anspruch 1, wobei zunächst eine Monoazo-Verbindung der Formel (IV)

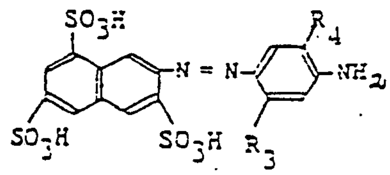

(IV)

in der $R_3$ und $R_4$ wie vorstehend definiert sind, mit Cyanursäurechlorid kondensiert, danach das erhaltene Produkt mit einer β-Hydroxyäthylsulfonyl-Verbindug der Formel (VI)

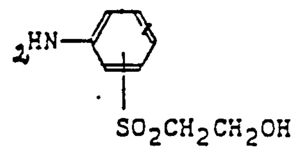

(VI)

ein zweites Mal kondensiert und dann das kondensierte Produkt in Schwefelsäure verestert wird.

8. Verwendung einer Verbindung nach den Ansprüchen 1 bis 3 zum Färben von Cellulosefasern.

**Revendications**

1. Composé de formule suivante sous la forme de l'acide libre:

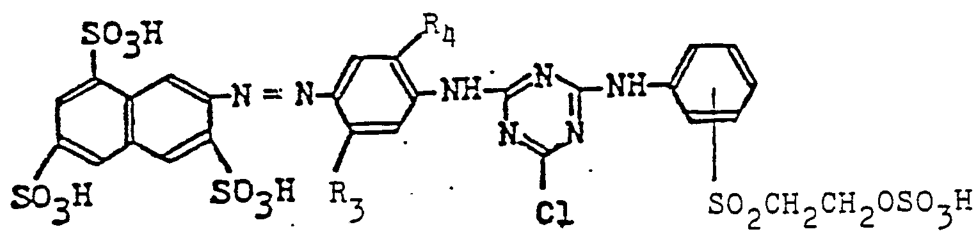

(I)

dans laquelle

$R_3$ est un radical méthyle et $R_4$ un radical-methoxy, et le radical $-SO_2CH_2CH_2OSO_3H$ est attaché au noyau benzénique en position m; ou bien

$R_3$ est un radical acétylamino et $R_4$ est l'hydrogène et le radical $-SO_2CH_2CH_2OSO_3H$ est attache au noyau benzénique en position m; ou bien

$R_3$ est un radical uréido et $R_4$ est l'hydrogène, et le radical $-SO_2CH_2CH_2OSO_3H$ est attaché au noyau benzénique en position m ou p.

2. Composé de formule:

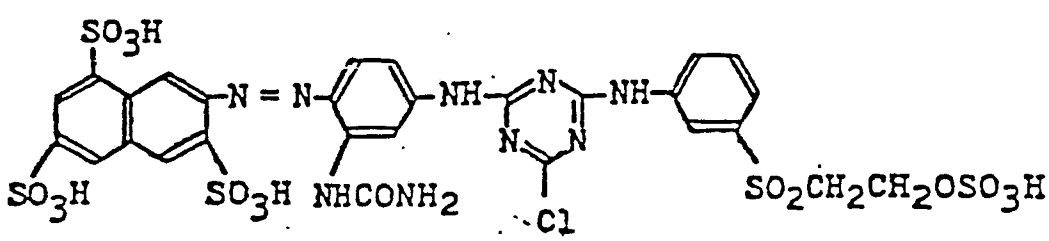

sous la forme de l'acide libre.

3. Composé de formule:

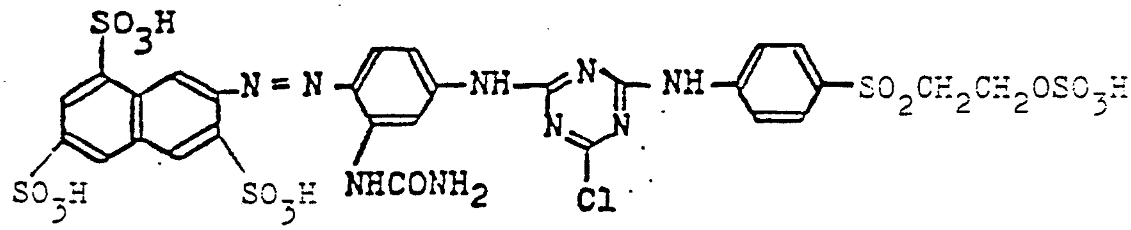

sous la forme de l'acide libre.

4. Procédé de préparation d'un composé de formule (I) selon la revendication 1, dans lequel on diazote un acide 2-aminonaphtalènesulfonique de formule (II):

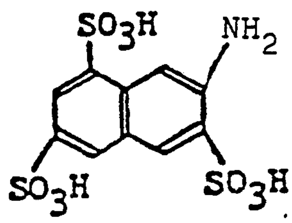

(II)

on copule celui-ci avec un composé aminé de formule (III):

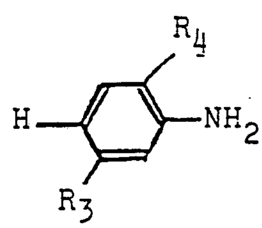

(III)

où $R_3$ et $R_4$ sont tels que définis ci-dessus, pour obtenir un composé monoazoïque de formule (IV):

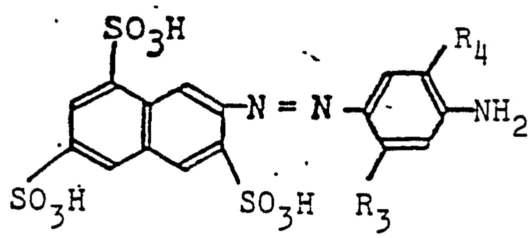

(IV)

où $R_3$ et $R_4$ sont tels que définis ci-dessus, on soumet ce composé à une première condensation avec du chlorure de cyanuryle pour obtenir un composé dichlorotriazinylé, et on soumet ensuite ce composé à une seconde condensation avec un composé d'aniline de formule (V):

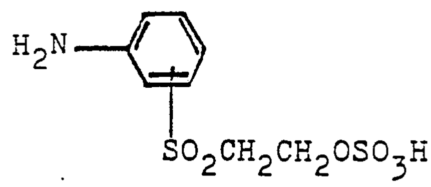

(V)

5. Procédé de préparation d'un composé de formule (I) selon la revendication 1, dans lequel on effectue une première condensation d'un composé d'aniline de formule (V):

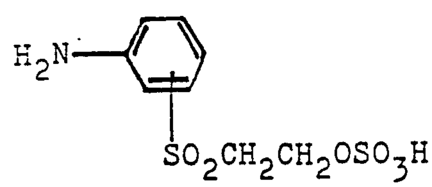

(V)

avec du chlorure de cyanuryle, puis on effectue une seconde condensation de celui-ci avec un composé monoazoïque de formule (IV);

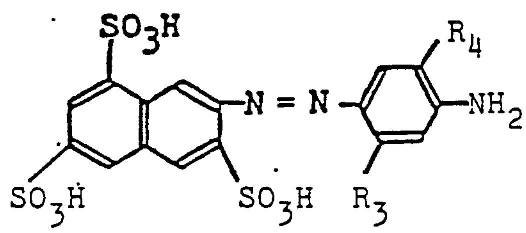

(IV)

où $R_3$ et $R_4$ sont tels que définis ci-dessus.

6. Procédé de préparation d'un composé de formule (I) selon la revendication 1, dans lequel on effectue une première condensation d'un composé β-hydroxyéthylsulfonylé de formule (VI):

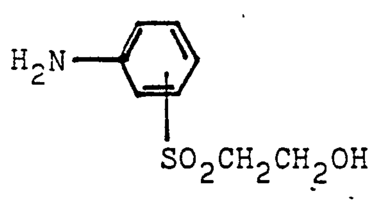

(VI)

avec du chlorure de cyanuryle, puis on effectue une seconde condensation de celui-ci avec un composé monoazoïque de formule (IV):

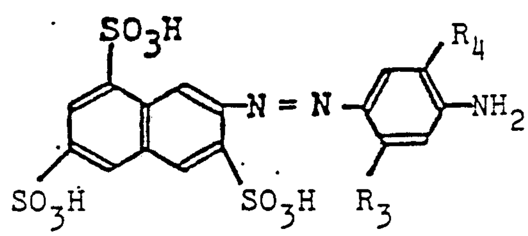

(IV)

où $R_3$ et $R_4$ sont tels que définis ci-dessus, et finalement on estérifie le produit condensé dans l'acide sulfurique.

7. Procédé de préparation d'un composé de formule (I) selon la revendication 1, dans lequel on effectue une première condensation d'un composé monoazoïque de formule (IV):

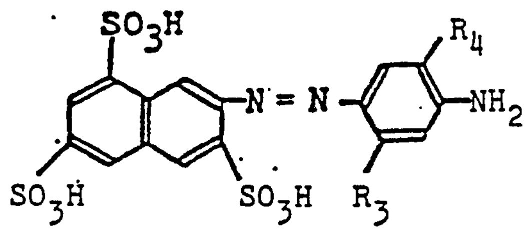

(IV)

où $R_3$ et $R_4$ sont tels que définis ci-dessus avec du chlorure de cyanuryle on effectue une seconde condensation du produit obtenu avec un composé β-hydroxyéthylsulfonylé de formule (VI):

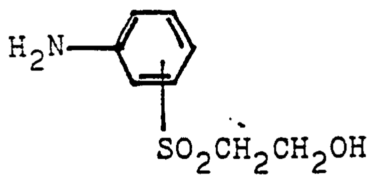

(VI)

puis on estérifie le produit condensé dans l'acide sulfurique.

8. Utilisation d'un composé selon les revendications 1 à 3 pour teindre des fibres cellulosiques.